# FASCICULE DE BREVET EUROPEEN

(11) **EP 3 732 088 B1**
(45) Date de publication et mention de la délivrance du brevet: **05.01.2022**
(21) Numéro de dépôt: 18803929.1
(22) Date de dépôt: 13.11.2018
(51) Int. Cl.: B62D 25/08, B62D 21/15, B62D 27/02, B62D 29/00

(54) **STRUCTURE DE CAISSE D'UN VÉHICULE AUTOMOBILE**
STRUKTUR EINER FAHRZEUGKAROSSERIE
VEHICLE BODY STRUCTURE

(30) Priorité: 20.12.2017 FR 1762588
(43) Date de publication de la demande: 04.11.2020
(73) Titulaire: Renault S.A.S., 92100 Boulogne-Billancourt (FR)
(72) Inventeur: CARRIE, Julien, 78000 VERSAILLES (FR); ROY, Jean-Baptiste, 78280 GUYANCOURT (FR)
(74) Mandataire: Urbillac, Chantal Corinne Annie
(86) Numéro de dépôt international: PCT/EP2018/081008
(87) Numéro de publication internationale: WO 2019/120754

(56) Documents cités:
- EP-A2- 1 084 936
- DE-A1- 10 001 102
- JP-A- 2003 200 849
- US-A1- 2008 036 243

## Description

La présente invention se rapporte à une structure de caisse d'un véhicule automobile.

Un véhicule automobile présente classiquement une structure de caisse composée notamment d'éléments longitudinaux, transversaux, verticaux et d'autres éléments complémentaires, assemblés de manière à créer l'ossature du véhicule. Ces éléments sont en matériaux métalliques, traditionnellement en acier. Toutefois dans le but de diminuer les émissions de polluants, en abaissant la consommation de carburant du véhicule, on est amené à diminuer le poids du véhicule, et ainsi à proposer des éléments de structure en matériau plus léger que l'acier, comme l'aluminium.

Par ailleurs il est nécessaire de garantir l'intégrité de la cellule de survie du véhicule, soit de l'habitacle. La structure de caisse doit conserver un niveau de résistance aux chocs répondant aux normes ou tests en vigueur. Des zones de jonctions entre différents éléments qui la composent, dites aussi nœuds de structure, sont particulièrement sollicitées en cas de chocs. C'est notamment le cas de la structure de caisse avant, ou soubassement avant, qui comprend des longerons disposés longitudinalement et latéralement, notamment un longeron gauche et un longeron droit, prolongé chacun par un coude de longeron. Le coude de longeron, qui s'étend vers le bas de la structure, permet de répartir les efforts que peut subir le longeron en cas de choc frontal notamment vers la partie inférieure de la caisse. Le coude de longeron qui prolonge le longeron est solidaire de la traverse de tablier, et ainsi l'ensemble longeron - coude de longeron vient en appui sur ladite traverse de tablier. La zone de jonction entre le longeron, le coude de longeron et la traverse de tablier forme ainsi un nœud de structure très sollicité en cas de chocs.

Le document JP 2003 200849 A divulgue un noeud de structure de caisse comprenant l'assemblage d'éléments en matériau léger dont un élément est extrudé. Le document JP 2003 200849 A ne divulgue cependant pas de troisième élément avec un jeu d'équerres de jonction et de renfort et des fixations par perçage et soudures.

Pour avoir la résistance aux chocs requise la traverse de tablier doit être en matériau très dur, de type acier embouti à chaud, alors que le longeron et/ou le coude de longeron peuvent être en matériau léger et relativement tendre comme l'aluminium. Toutefois la réalisation de liaisons par soudure ou présentant des perçages entre des éléments en métaux de nature différentes, l'un très dur et l'autre plus tendre, notamment entre l'acier embouti à chaud (trempé) et l'aluminium peut s'avérer impossible dans l'état de l'art connu ou au moins dans un temps de cycle de production industrielle et de contraintes économiques.

L'invention vise à résoudre les problèmes d'assemblage que peuvent présenter des éléments d'une structure de véhicule dont certains peuvent être en matériaux durs et d'autres en matériaux plus tendres, tout en garantissant les propriétés de résistance aux chocs de ladite structure, notamment au niveau de ces zones d'assemblage, soient des zones de jonction ou nœuds de structure.

A cet effet l'invention propose une structure de caisse d'un véhicule automobile présentant au moins un nœud de structure, apportant de la résistance aux chocs, entre au moins un premier élément longitudinal extrudé, un deuxième élément en fonderie solidarisé au premier élément, et un troisième élément embouti à chaud, un jeu d'équerres de jonction et de renfort embouti à froid s'interfaçant avec lesdits premier et deuxième éléments par des liaisons comprenant des perçages, et par des liaisons soudées avec ledit troisième élément, et le cas échéant s'interfaçant entre elles par des liaisons, en particulier par soudure, de sorte que lesdits éléments soient solidaires entre eux, et que la jonction entre lesdits premier et deuxième éléments présente une inertie aux chocs, en particulier une inertie transversale, et vienne en appui contre ledit élément en embouti à chaud en cas de choc.

On entend par « un élément extrudé » un élément issu d'extrusion ou réalisé par extrusion, par « élément en fonderie » un élément issu de fonderie ou réalisé en fonderie, par « élément embouti à chaud » un élément issu d'emboutissage à chaud, et par « élément embouti à froid » un élément issu d'emboutissage à froid.

De préférence selon l'invention, ledit premier élément est en aluminium extrudé, ledit deuxième élément est en fonderie d'aluminium, et ledit troisième élément est en acier embouti à chaud, et lesdites équerres sont en acier embouti à froid.

Plus particulièrement selon l'invention lesdites équerres présentent une forme adaptée à s'interfacer à la fois avec ledit troisième élément et ledit premier élément et/ou ledit deuxième élément. Les équerres peuvent avoir des formes différentes, l'une de leur face étant apte à s'adapter à la forme du troisième élément, et son autre face à l'une des faces avec le premier et/ou le deuxième éléments.

De préférence selon l'invention, ledit jeu d'équerres comprend une à trois équerres, de préférence deux à trois équerres.

Avantageusement selon l'invention, ledit troisième élément est disposé transversalement audit premier élément longitudinal.

De préférence les liaisons entre les équerres et ledit premier élément ou le deuxième élément comprennent des moyens de liaison auto-perceurs, par exemple des moyens auto-taraudeurs, comme par exemple des vis auto-taraudeuses, ou des moyens auto-poinçonneurs, comme par exemple des rivets auto-poinçonneurs.

Plus particulièrement selon l'invention, ledit premier élément est un longeron avant, ledit deuxième élément est un coude de longeron solidarisé audit longeron, et le troisième élément est la traverse de tablier.

En effet l'invention vise plus particulièrement à proposer une structure de caisse avant de véhicule comprenant deux longerons latéraux gauche et droit, chacun solidarisé à un coude de longeron joint avec la traverse de tablier, formant de part et d'autre un nœud de structure, soit la zone de jonction entre un longeron avant, un coude de longeron et le traverse de tablier, présentant une résistance aux chocs répondant à divers normes ou tests en vigueur, tout en permettant l'assemblage de ces éléments concernés.

Selon ce cas particulier de l'invention, la traverse de tablier, à laquelle se fixe le tablier du véhicule, paroi isolante acoustiquement entre l'habitacle et la partie avant du véhicule comprenant le compartiment moteur, est réalisée en matériau très dur, présentant des limites élastiques extrêmement élevées, en particulier en un acier embouti à chaud, soit un acier trempé, apportant ainsi une résistance mécanique renforcée garantissant l'intégrité de la fonderie durant toute la phase de compactage du longeron en cas de choc. Selon l'invention, les longerons sont en aluminium. De préférence les longerons sont en aluminium extrudé. Ils présentent ainsi une section constante sur toute leur longueur, alors que traditionnellement la section d'un longeron de l'art antérieur réalisé par emboutissage acier augmente en direction de la traverse de tablier pour assurer une inertie transversale à la jonction longeron - coude de longeron, afin de garantir les appuis en cas de chocs. Les équerres, en plus de permettre l'assemblage des éléments, renforcent la jonction coude de longeron et longeron dans la direction transversale, et permettent d'assurer aussi l'inertie transversale que l'on peut avoir avec des longerons antérieurs.

L'invention concerne aussi un véhicule automobile comprenant une structure de caisse telle que définie précédemment, en particulier une structure de caisse avant.

D'autres particularités et avantages de l'invention ressortiront à la lecture de la description faite ci-après de modes de réalisation particuliers de l'invention, à titre indicatif mais non limitatif, en référence aux dessins annexés pour lesquels :
- la figure 1 représente partiellement, selon une vue en volume, une structure de de caisse avant d'un véhicule selon l'invention ;
- la figure 2 illustre, selon une vue de dessus, d'une moitié de la structure de la figure 1 selon l'invention, équipée du tablier du véhicule ;
- la figure 3 illustre schématiquement une vue suivant la section transversale A-A d'une zone de la figure 2 selon l'invention.

Dans la suite de la description il est fait référence à un repère XYZ, dans lequel X est la direction longitudinale avant arrière du véhicule, orientée vers l'arrière, Y est la direction transversale orientée vers la droite du véhicule, et Z est la direction verticale orientée vers le haut du véhicule.

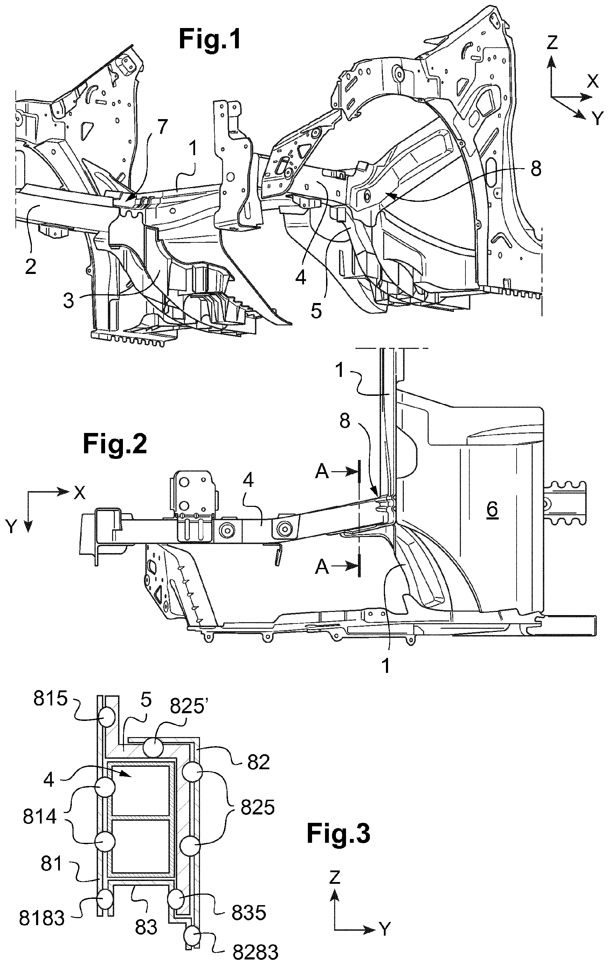

La figure 1 illustre suivant une vue partielle, et en volume de trois-quarts depuis le dessous du véhicule, une structure de caisse avant du véhicule, ou soubassement avant, comprenant les éléments essentiels relatifs à l'invention formés de la traverse de tablier 1, des longerons latéraux 2, 4 et des coudes de longerons 3, 5 ainsi que deux ensembles d'équerres de jonctions et de renfort 7, 8.

La figure 2 illustre, suivant une vue de dessus, le côté gauche de la structure de la figure 1, y compris le tablier visible partiellement, du véhicule.

La figure 3 est un schéma illustrant un exemple particulier d'une disposition des équerres de l'ensemble d'équerres 8 et leurs interfaces avec le longeron gauche 4 et le coude de longeron 5, suivant la coupe transversale A-A indiquée en figure 2.

Les figures 1 à 3 vont être décrites ensemble, et les références étant les mêmes d'une figure à l'autre.

La structure de caisse avant représentée comprend sur son côté droit, un longeron avant droit 2 prolongé en son extrémité arrière par un coude de longeron droit 3 s'étendant vers le bas de la structure, l'ensemble longeron-coude longeron venant se solidariser en appui contre la traverse de tablier 1, formant ainsi une zone de jonction entre ces trois éléments de structure, ou nœud de structure. Similairement le côté gauche du véhicule comprend un longeron gauche 4 prolongé en son extrémité arrière par un coude de longeron gauche 5 qui s'étend vers le bas de la structure, et l'ensemble venant se solidariser à la traverse de tablier en appui.

Chaque longeron présente une extrémité à l'avant du véhicule réceptrice d'une traverse avant réceptrice du bouclier avant non représentés. A la traverse de tablier, de l'autre côté de la jonction avec les longerons et coude de longerons, se fixe le tablier 6, cloison isolante acoustiquement entre l'habitacle et le compartiment moteur avant.

La traverse de tablier est en acier embouti à chaud, acier très dur avec des limites en élasticité très élevées, par exemple en acier 22MnB5 ou 6Mn6. Les longerons sont en aluminium extrudé. Ils sont de section constante. Selon cet exemple les coudes de longerons sont en fonderie d'aluminium.

A chaque nœud de structure, afin d'assurer d'une part l'assemblage entre les trois éléments et d'autre part la résistance aux chocs dudit nœud de structure, est apposé un jeu d'équerres, un jeu référencé 7 pour le nœud droit et référencé 8 pour le nœud gauche. Chaque jeu peut comprendre une à trois équerres. Selon cet exemple particulier non limitatif, les jeux comprennent chacun trois équerres. Lesdites équerres sont en acier embouti à froid. Le schéma en coupe de la figure 3 montre plus en détails le jeu d'équerres 8 et les points de liaisons et l'interfaçage avec le longeron 4 et le coude de longeron 5. Ledit jeu 8 comprend une première équerre 81 latérale, interfacée avec la face intérieure du longeron 5, par des points de liaison transversale (en Y), selon l'exemple deux points de liaison 814 en Y, à l'aide de vis auto-taraudeuses. Ladite première équerre 81 est par ailleurs interfacée avec le coude de longeron par des points de liaison transversale (en Y), selon l'exemple un point de liaison 815 en Y à l'aide de rivets auto-poinçonneurs. De l'autre côté, une deuxième équerre 82 est interfacée avec le coude de longeron, suivant des points de liaison transversale (en Y) et de liaison verticale (en Z), selon l'exemple deux points 825 en Y et un point 825' en Z, par des vis auto-taraudeuses. Une troisième équerre 83 vient s'interfacer sous le longeron et le coude de longeron, et également avec les deux autres équerres. Suivant cet exemple, cette troisième équerre 83 présente un point de liaison transversale avec le coude, soit par exemple un point 835 en Y réalisé par liaison avec rivets auto-poinçonneurs, un point de liaison transversale avec la première équerre 81 par soudure (point 8183), et un point de liaison transversale avec la deuxième équerre 82 par soudure (point 8283). Les perçages sont de préférence réalisés non traversants dans le longeron ou le coude de longeron.

Les trois équerres 81, 82, 83 sont en outre interfacées avec la traverse de tablier 1. Elles présentent des points de liaison avec la traverse de tablier, par soudure, la nature des équerres en acier embouti à froid et celle de la traverse de tablier en acier embouti à chaud étant compatibles.

Les équerres ont des formes permettant d'épouser les formes des portions d'éléments avec lesquelles elles s'interfacent.

Le nombre d'équerres et la forme des équerres sont donnés à titre indicatif, deux peuvent suffire par exemple. De même le nombre de liaisons et les directions de liaisons sont donnés à titre indicatif.

Sur la figure 3, les liaisons entre le longeron et le coude longeron ne sont pas représentées. Ces deux éléments sont par exemple solidarisés entre eux par des moyens de liaison de type vis auto-taraudeuses.

Selon l'exemple illustré, le longeron et le coude sont parfaitement maintenus ensemble, et à la traverse de tablier, grâce aux dites équerres formant des équerres de jonction, et aussi de renfort en rigidifiant l'assemblage formant un nœud de structure. Les liaisons entre les équerres et la traverse de tablier sont très robustes, et à cela se combine leur interfaçage avec le coude de longeron et le longeron rendant l'encastrement du coude de longeron avec le longeron très solide.

Les équerres de structure permettent de garantir les appuis du longeron et d'éviter les moments induits pour obtenir la bonne cinématique de choc. De plus les équerres peuvent permettre de raccrocher des interfaces fortement sollicitées en choc pour éviter la diffusion d'énergie dans la fonderie et donc potentiellement éviter qu'elle ne casse, par exemple en intégrant une douille de fixation de berceau à l'une de ces équerres pour éviter la casse de la fonderie.

L'invention fournit ainsi une structure de caisse avant qui comprend deux longerons latéraux avant en aluminium, chacun solidarisé avec un coude de longeron en acier embouti à froid, et une traverse de tablier en acier embouti à chaud se solidarisant aux coudes de longeron, des équerres en acier embouti à froid s'interfaçant par liaisons avec lesdits longerons, coudes de longeron et traverse de tablier en la zone de jonction des trois éléments répondant aux normes et tests de résistance aux chocs pour un véhicule automobile.

L'invention permet de résoudre le problème d'assembler une pièce en acier très dur et une pièce en aluminium, matériau bien plus tendre que l'acier, tout en garantissant une résistance aux chocs élevée. Plus particulièrement l'invention permet l'encastrement d'un coude de longeron en fonderie d'aluminium avec une traverse de tablier en emboutissage à chaud dans un nœud de structure avec un longeron.

## Revendications

1. Structure de caisse d'un véhicule automobile présentant au moins un nœud de structure, apportant de la résistance aux chocs, entre au moins un premier élément longitudinal extrudé (2, 4), un deuxième élément en fonderie (3, 5) solidarisé au premier élément, et un troisième élément embouti à chaud (1), un jeu d'équerres de jonction et de renfort embouti à froid (7, 8) s'interfaçant avec lesdits premier et deuxième éléments par des liaisons comprenant des perçages (814, 815, 825, 835, 825'), et par des liaisons soudées avec ledit troisième élément, et le cas échéant s'interfaçant entre elles par des liaisons (8183, 8283), en particulier par soudure, de sorte que lesdits éléments soient solidaires entre eux, et que la jonction entre lesdits premier et deuxième éléments présente une inertie aux chocs, en particulier une inertie transversale, et vienne en appui contre ledit élément en embouti à chaud en cas de chocs.

2. Structure de caisse selon la revendication 1, **caractérisée en ce que** ledit premier élément est en aluminium extrudé, ledit deuxième élément est en fonderie d'aluminium, et ledit troisième élément est en acier embouti à chaud, et lesdites équerres sont en acier embouti à froid.

3. Structure de caisse selon l'une des revendications 1 à 2, **caractérisée en ce que** lesdites équerres présentent une forme adaptée à s'interfacer à la fois avec ledit troisième élément et ledit premier élément et/ou ledit deuxième élément.

4. Structure de caisse selon l'une des revendications 1 à 3, **caractérisée en ce que** ledit jeu d'équerres comprend 1 à 3 équerres, de préférence 2 à 3 équerres.

5. Structure de caisse selon l'une des revendications 1 à 4, **caractérisée en ce que** ledit troisième élément est disposé transversalement audit premier élément.

6. Structure de caisse selon l'une des revendications 1 à 5, **caractérisée en ce que** les liaisons entre les équerres et ledit premier élément ou le deuxième élément comprennent des moyens de liaison auto-perceurs.

7. Structure de caisse selon l'une des revendications 1 à 6, **caractérisée en ce que** ledit premier élément est un longeron avant, ledit deuxième élément est un coude de longeron solidarisé audit longeron, et le troisième élément est la traverse de tablier.

8. Véhicule automobile comprenant une structure de caisse définie à l'une des revendications 1 à 7, en particulier une structure de caisse avant.

## Patentansprüche

1. Karosseriestruktur eines Kraftfahrzeugs, die mindestens einen Aufprallfestigkeit verleihenden Strukturknoten zwischen mindestens einem ersten extrudierten Längselement (2, 4), einem zweiten mit dem ersten Element fest verbundenen Gusselement (3, 5) und einem dritten warm tiefgezogenen Element (1) aufweist, wobei ein Satz kalt tiefgezogener Verbindungs- und Aussteifungswinkel (7, 8) mit den ersten und zweiten Elementen durch Verbindungen gekoppelt wird, die Bohrungen (814, 815, 825, 835, 825') umfassen, und mit dem dritten Element durch geschweißte Verbindungen und gegebenenfalls untereinander durch Verbindungen (8183, 8283), insbesondere durch Schweißen, gekoppelt wird, so dass die Elemente untereinander fest verbunden sind und dass die Verbindung zwischen den ersten und zweiten Elementen eine Aufprallträgheit, insbesondere eine Querträgheit, aufweist und im Fall eines Aufpralls an dem warm tiefgezogenen Element zur Anlage kommt.

2. Karosseriestruktur nach Anspruch 1, **dadurch gekennzeichnet, dass** das erste Element aus extrudiertem Aluminium ist, das zweite Element aus Aluminiumguss ist und das dritte Element aus warm tiefgezogenem Stahl ist und die Winkel aus kalt tiefgezogenem Stahl sind.

3. Karosseriestruktur nach einem der Ansprüche 1 bis 2, **dadurch gekennzeichnet, dass** die Winkel eine Form aufweisen, die geeignet ist, sowohl mit dem dritten Element als auch mit dem ersten Element und/oder dem zweiten Element gekoppelt zu werden.

4. Karosseriestruktur nach einem der Ansprüche 1 bis 3, **dadurch gekennzeichnet, dass** der Satz Winkel 1 bis 3 Winkel, bevorzugt 2 bis 3 Winkel umfasst.

5. Karosseriestruktur nach einem der Ansprüche 1 bis 4, **dadurch gekennzeichnet, dass** das dritte Element quer zum ersten Element angeordnet ist.

6. Karosseriestruktur nach einem der Ansprüche 1 bis 5, **dadurch gekennzeichnet, dass** die Verbindungen zwischen den Winkeln und dem ersten Element oder dem zweiten Element selbstbohrende Verbindungsmittel umfassen.

7. Karosseriestruktur nach einem der Ansprüche 1 bis 6, **dadurch gekennzeichnet, dass** das erste Element ein vorderer Längsträger ist, das zweite Element eine mit dem Längsträger fest verbundene Längsträgerabwinklung ist und das dritte Element der Stirnwandquerträger ist.

8. Kraftfahrzeug, das eine in einem der Ansprüche 1 bis 7 definierte Karosseriestruktur umfasst, insbesondere eine Vorbau-Karosseriestruktur.

## Claims

1. Motor vehicle body structure having at least one structural node, affording impact resistance, between at least an extruded first longitudinal part (2, 4), a cast second part (3, 5) secured to the first part, and a hot-stamped third part (1), a set of cold-stamped joining and reinforcing brackets (7, 8) interfacing with said first and second parts via joins comprising drillings (814, 815, 825, 835, 825'), and via welded joins to said third part and, where appropriate, interfacing with one another via joins (8183, 8283), particularly welded joins, so that said parts are secured to one another, and so that the join between said first and second parts exhibits inertia with respect to impacts, particularly transverse inertia, and comes to bear against said hot-stamped part in the event of impact.

2. Body structure according to Claim 1, **characterized in that** said first part is made of extruded aluminum, said second part is an aluminum casting, and said third part is made of hot-stamped steel, and said brackets are made of cold-stamped steel.

3. Body structure according to either of Claims 1 and 2, **characterized in that** said brackets have a shape suited to interfacing both with said third part and said first part and/or said second part.

4. Body structure according to one of Claims 1 to 3, **characterized in that** said set of brackets comprises 1 to 3 brackets, preferably 2 to 3 brackets.

5. Body structure according to one of Claims 1 to 4, **characterized in that** said third part is arranged transversely to said first part.

6. Body structure according to one of Claims 1 to 5, **characterized in that** the joins between the brackets and said first part or the second part comprise self-piercing joining means.

7. Body structure according to one of Claims 1 to 6, **characterized in that** said first part is a front side member, said second part is a side member elbow secured to said side member, and the third part is the bulkhead crossmember.

8. Motor vehicle comprising a body structure defined in one of Claims 1 to 7, particularly a front body structure.
